# EUROPÄISCHE PATENTANMELDUNG

(11) **EP 1 172 144 A2**
(43) Veröffentlichungstag der Anmeldung: **16.01.2002**
(21) Anmeldenummer: 01114817.8
(22) Anmeldetag: 27.06.2001
(51) Int. Cl.: B01J 39/20, C02F 1/42, C08F 8/36

(54) **Sulfonierungsverfahren**

(30) Priorität: 11.07.2000 DE 10033585
(71) Anmelder: BAYER AG, 51368 Leverkusen (DE)
(72) Erfinder: Klipper, Reinhold, Dr., 50933 Köln (DE); Wagner, Rudolf, Dr., 51061 Köln (DE); Seidel, Rüdiger, Dr., 51375 Leverkusen (DE); Lütjens, Holger, Dr., 51069 Köln (DE); Ingendoh, Axel, Dr., 51519 Odenthal (DE); Schnegg, Ulrich, Dr., 51377 Leverkusen (DE)

(57) **Zusammenfassung**

Die vorliegende Erfindung betrifft ein Verfahren zur Herstellung makroporöserstarksaurer oder starksaurer monodisperser-gelförmiger Ionenaustauscher, insbesondere makroporöser-monodisperser und makroporöser-heterodisperser und monodisperser-gelförmiger Kationenaustauscher mit Schwefelsäure, indem man diese stufenweise getaktet entlang des Konzentrationsgradienten auf das jeweilige Basispolymerisat einwirken läßt, die Kationenaustauscher hergestellt nach diesem Verfahren sowie deren Verwendungen.

## Beschreibung

Die vorliegende Erfindung betrifft ein Verfahren zur Herstellung makroporöser starksaurer Ionenaustauscher und starksaurer monodisperser-gelförmiger Ionenaustauscher, insbesondere makroporöser-monodisperser Ionenaustauscher, makroporöser-heterodisperser Ionenaustauscher und monodisperser-gelförmiger Ionenaustauscher, durch Sulfonierung mit Schwefelsäure indem man diese stufenweise, getaktet, mit abnehmender Konzentration auf das Polymerisat einwirken lässt.

Aus EP 0 868 444 B1 ist ein Verfahren zur Herstellung stark saurer Kationenaustauscher mit einer Korngröße ≥0,1 mm bekannt, das ohne Zusatz inerter chlorhaltiger Quellmittel und/oder von Comonomeren auf Acrylnitrilbasis bei Temperaturen im Bereich von 125 bis 180°C mit 80 bis 96 %iger Schwefelsäure durchgeführt wird. Dieses Verfahren eignet sich zur Sulfonierung gelartiger oder poröser Perlpolymerisate.

Aus EP 0 223 569 B1 ist ein Verfahren zum Waschen von sulfonierten Kationenaustauscherharzkügelchen zur Entfernung von Schwefelsäure bekannt, wobei diskrete Mengen einer wässrigen Schwefelsäure mit abnehmender Konzentration und abschließend eine diskrete Menge Wasser durch ein Bett aus sulfonierten Kationenaustauscherharzkügelchen und konzentrierter Schwefelsäure gegeben wird. Die Sulfonierung selber erfolgt dabei jedoch in Anwesenheit eines Quellmittels, beispielsweise Methylenchlorid oder Ethylenchlorid und die Temperatur darf während der Verdünnungsschritte am Einführungspunkt in das Bett 40°C nicht übersteigen.

Nachteilig an den Sulfonierungsverfahren gemäß dem Stand der Technik ist die Tatsache, dass trotz aller Bestrebungen die mechanische Stabilität als auch die Austauschkapazität zu erhöhen, die Produkte auf Grund von produktionstechnisch bedingten oder während des Gebrauchs gebildeten löslichen Polymeren zu unerwünschtem Ausbluten (Leaching) neigen können.

In DE-A 10 020 534 begegnete man diesem Problem bei der Synthese von monodispersen gelförmigen Kationenaustauschern, indem man trockenes Perlpolymerisat in 97,32 gew.-%ige Schwefelsäure bei 100°C über 4 Stunden hinweg portionsweise unter Rühren einträgt, 6 Stunden bei 120°C nachrührt und schließlich mit Schwefelsäuren abnehmender Konzentration, beginnend mit 90 Gew.-% und zuletzt mit reinem Wasser jedoch nicht getaktet über eine Säule filtriert.

Die Aufgabe der vorliegenden Erfindung bestand darin, sowohl für makroporöse Perlpolymerisate als auch für monodisperse-gelförmige Perlpolymerisate ein Sulfonierungsverfahren zu entwickeln, um die für die heutigen Maßstäbe erforderliche osmotische und mechanische Beständigkeit der sulfonierten Produkte zu erhöhen und gleichzeitig eine hohe Austauschkapazität zu gewährleisten. Unter makroporösen Perlpolymerisaten sind im Rahmen der vorliegenden Erfindung sowohl makroporöse-monodisperse als auch makroporöse-heterodisperse Perlpolymerisate zu verstehen. Die Produkte nach Sulfonierung sind makroporöse-monodisperse oder makroporöse-heterodisperse starksaure Kationenaustauscher; aus den monodispersen-gelförmigen Perlpolymerisaten erhält man monodisperse-gelförmige Kationenaustauscher.

Die Erfindung betrifft deshalb ein Sulfonierungsverfahren zur Herstellung makroporöser oder monodisperser-gelförmiger Kationenaustauscher, dadurch gekennzeichnet, dass man
a) makroporöse oder monodisperse-gelförmige Perlpolymerisate ohne Quellmittel bei Temperaturen von 110° bis 140°C in Schwefelsäure eindosiert,
b) bei der jeweiligen Temperatur solange nachrührt, bis eine vollständige Sulfonierung erfolgt ist,
c) nach erfolgter Sulfonierung das jeweilige Perlpolymerisat stufenweise, getaktet mit Schwefelsäuren abnehmender Konzentration verdünnt und
d) schließlich mit vollentsalztem Wasser wäscht.

Gegebenenfalls erfolgt nach dem Schritt d) die Umwandlung des Harzes von der sauren H-Form in die Salzform in einem Schritt e).

In einer bevorzugten Ausführungsform kann das erfindungsgemäße Verfahren in einer prozessgesteuerten Anlage betrieben werden, wobei die stufenweise Verdünnung mit Schwefelsäure abnehmender Konzentrationen und die durch die Taktung bedingten Ruhezeiten mittels Computerprogrammen gesteuert wird.

Das Verfahren führt zu starksauren, makroporösen, monodispersen oder starksauren, makroporösen, heterodispersen oder monodispersen-gelförmigen Kationenaustauschern, die sich durch eine besonders hohe mechanische und osmotische Stabilität auszeichnen und darüber hinaus eine hohe Austauschkapazität gewährleisten.

Sie zeigen auch nach längerem Gebrauch und vielfacher Regeneration äußerst wenig Defekte an den Ionenaustauscherkugeln und ein im Vergleich mit den Produkten des Standes der Technik verringertes Ausbluten (Leaching) des Austauschers.

Aufgrund ihrer gegenüber dem Stand der Technik deutlich erhöhten Stabilität und Reinheit, insbesondere der erhöhten Oxidationsstabilität eignen sich die Kationenaustauscher gemäß der vorliegenden Erfindung insbesondere zur Trinkwasseraufbereitung, zur Herstellung von Reinstwasser, zur chromatographischen Trennung von Zuckern, beispielsweise von Glucose und Fructose, sowie als Katalysatoren für chemische Reaktionen, wie beispielsweise bei Kondensationsreaktionen, Additionsreaktionen, Umesterungen oder Alkylierungsreaktionen.

Gegenstand der vorliegenden Erfindung sind deshalb auch die starksauren, makroporösen Kationenaustauscher sowohl in monodisperser als auch heterodisperser Form als auch monodisperse-gelförmige Kationenaustauscher, die gemäß dem erfindungsgemäßen Verfahren hergestellt werden sowie deren Verwendung zur Trinkwasseraufbereitung, zur Herstellung von Reinstwasser, zur chromatographischen Trennung von Zuckern sowie als Katalysatoren bei Kondensationsreaktionen, Additionsreaktionen, Umesterungen oder Alkylierungsreaktionen.

Die erfindungsgemäßen starksauren, makroporösen Kationenaustauscher und die monodispersen-gelförmigen Kationenaustauscher eignen sich hervorragend zum Einsatz in der Elektronikindustrie bei der Computer-Chipherstellung aber auch in der Lebensmittelindustrie, insbesondere der Zuckerindustrie, oder als Katalysatoren in der chemischen Industrie.

Die erfindungsgemäß hergestellten starksauren makroporösen Kationenaustauscher weisen Porenbereiche von 10 nm und mehr auf.

Ausgangsstoffe im Verfahrensschritt a) des erfindungsgemäßen Verfahrens sind monodisperse-makroporöse oder heterodisperse-makroporöse Perlpolymerisate oder monodisperse-gelförmige Perlpolymerisate (Basispolymerisat). Diese bestehen aus vernetzten Polymerisaten ethylenisch einfach ungesättigter Monomerer, die zum überwiegenden Teil aus mindestens einer Verbindung der Reihe Styrol, Vinyltoluol, Ethylstyrol, α-Methylstyrol oder deren kernhalogenierte Derivate wie Chlorstyrol bestehen; sie können daneben auch eine oder mehrere Verbindungen aus der Reihe Vinylbenzylchlorid, Acrylsäure, ihre Salze und ihre Ester, insbesondere ihren Methylester, ferner Vinylnaphthaline, Vinylxylole oder die Nitrile oder Amide von Acryl- oder Methacrylsäuren enthalten.

Die Polymerisate sind vernetzt - vorzugsweise durch Copolymerisation mit vernetzenden Monomeren mit mehr als einer, vorzugsweise mit 2 oder 3, copolymerisierbaren C=C-Doppelbindung(en) pro Molekül. Solche vernetzenden Monomeren umfassen beispielsweise polyfunktionelle Vinylaromaten wie Di- oder Trivinylbenzole, Divinylethylbenzol, Divinyltoluol, Divinylxylol, Divinylethylbenzol, Divinylnaphthalin, polyfunktionelle Allylaromaten wie Di- oder Triallylbenzole, polyfunktionelle Vinyl- oder Allylheterocyclen wie Trivinyl- oder Triallylcyanurat oder -isocyanurat, N,N'-C₁-C₆-Alkylendiacrylamide oder -dimethacrylamide wie N,N'-Methylendiacrylamid oder -dimethacrylamid, N,N'-Ethylendiacrylamid oder -dimethacrylamid, Polyvinyl- oder Polyallylether gesättigter C₂-C₂₀-Polyole mit 2 bis 4 OH-Gruppen pro Molekül, wie z.B. Ethylenglykoldivinyl- oder -diallylether oder Diethylenglykoldivinyl- oder -diallylether, Ester ungesättigter C₃-C₁₂-Alkohole oder gesättigter C₂-C₂₀-Polyole mit 2 bis 4 OH-Gruppen pro Molekül wie Allylmethacrylat, Ethylenglykoldi(meth)acrylat, Glycerintri(meth)acrylat, Pentaerythrittetra(meth)acrylat, Divinylethylenharnstoff, Divinylpropylenharnstoff, Divinyladipat, aliphatische oder cycloaliphatische Olefine mit 2 oder 3 isolierten C=C-Doppelbindungen wie Hexadien-1,5, 2,5-Dimethylhexadien-1,5, Octadien-1,7, 1,2,4-Trivinylcyclohexan. Als vernetzende Monomere haben sich Divinylbenzol (als Isomerengemisch) sowie Mischungen aus Divinylbenzol und aliphatischen C₆-C₁₂ Kohlenwasserstoffen mit 2 oder 3 C=C-Doppelbindungen besonders bewährt. Die vernetzenden Monomeren werden im allgemeinen in Mengen von 1 bis 80 Gew.-%, vorzugsweise 2 bis 25 Gew.-%, bezogen auf die Gesamtmenge der eingesetzten polymerisierbaren Monomeren, eingesetzt.

Die vernetzenden Monomeren müssen nicht in reiner Form, sondern können auch in Form ihrer technisch gehandelten Mischungen minderer Reinheit (wie z.B. Divinylbenzol in Mischung mit Ethylstyrol) eingesetzt werden.

Die Copolymerisation von Monomer und Vernetzer wird üblicherweise durch Radikalbildner initiiert, die monomerlöslich sind. Bevorzugte radikalbildende Katalysatoren umfassen beispielsweise Diacylperoxide wie Diacetylperoxid, Dibenzoylperoxid, Di-p-chlorbenzoylperoxid, Lauroylperoxid, Peroxyester wie tert.-Butylperoxyacetat, tert.-Butylperoctoat, tert.-Butylperoxypivalat, tert.-Butylperoxy-2-ethylhexanoat, tert.-Butylperoxybenzoat, Dicyclohexylperoxydicarbonat, Alkylperoxide wie Bis-(tert.-butylperoxy)butan, Dicumylperoxid, tert.-Butylcumylperoxid, Hydroperoxide wie Cumolhydroperoxid, tert.-Butylhydroperoxid, Ketonperoxide wie Cyclohexanon-hydroperoxid, Methylethylketonhydroperoxid, Acetylacetonperoxid oder - vorzugsweise Azoisobutyrodinitril.

Die Radikalbildner können in katalytischen Mengen, d.h. vorzugsweise 0,01 bis 2,5 Gew.-%, insbesondere 0,12 bis 1,5 Gew.-%, bezogen auf die Summe von Monomer und Vernetzer, eingesetzt werden.

Die Herstellung der vernetzten Basispolymerisate kann nach bekannten Methoden der Suspensionspolymerisation erfolgen; vgl. Ullmann's Encyclopedia of Industrial Chemistry, 5^{th} ed., Vol. A21, 363-373, VCH Verlagsgesellschaft mbH, Weinheim 1992. Die wasserunlösliche Monomer/Vernetzer-Mischung wird einer wässrigen Phase zugesetzt, die vorzugsweise zur Stabilisierung der Monomer/Vernetzer-Tröpfchen in der dispersen Phase und den daraus entstehenden Perlpolymerisaten mindestens ein Schutzkolloid enthält. Als Schutzkolloide sind natürliche und synthetische wasserlösliche Polymere, wie z.B. Gelatine, Stärke, Polyvinylalkohol, Polyvinylpyrrolidon, Polyacrylsäure, Polymethacrylsäure oder Copolymerisate aus (Meth)acrylsäure oder (Meth)acrylsäureestem bevorzugt. Sehr gut geeignet sind auch Cellulosederivate, insbesondere Celluloseether oder Celluloseester, wie Methylhydroxyethylcellulose, Methylhydroxypropylcellulose, Hydroxyethylcellulose oder Carboxymethylcellulose. Die Einsatzmenge der Schutzkolloide beträgt im allgemeinen 0,02 bis 1 Gew.-%, vorzugsweise 0,05 bis 0,3 Gew.-%, bezogen auf die Wasserphase.

Das Gewichtsverhältnis wässrige Phase/organische Phase liegt im Bereich von vorzugsweise 0,5 bis 20, insbesondere 0,75 bis 5.

Nach einer besonderen Ausführungsform werden die Basispolymerisate während der Polymerisation in Anwesenheit eines Puffersystems hergestellt. Bevorzugt werden Puffersysteme, die den pH-Wert der Wasserphase bei Beginn der Polymerisation auf einen Wert zwischen 14 und 6, vorzugsweise zwischen 12 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Die Konzentration an Puffer in der Wasserphase beträgt vorzugsweise 0,5 bis 500 mmol, insbesondere 2,5 bis 100 mmol pro Liter wässriger Phase.

Die organische Phase kann durch Rühren in der wässrigen Phase verteilt werden, wobei die Teilchengröße der entstehenden Tröpfchen wesentlich von der Rührgeschwindigkeit abhängt. Wenn man Basispolymerisate möglichst einheitlicher Teilchengröße (im allgemeinen "monodispers" genannt) wünscht, sind dafür geeignete Verfahren vorzuziehen. Der Monomerstrom kann zu diesem Zweck in die wässrige Phase eingedüst werden, wobei durch schwingungsangeregten Strahlzerfall und/oder Mikroverkapselung der entstandenen Monomertröpfchen die Erzeugung von Tröpfchen gleichmäßiger Größe unter Vermeidung von Koaleszenz gewährleistet wird (EP 0 046 535 B1 und EP 0 051 210 B1).

Damit die Basispolymerisate die makroporöse Struktur erhalten setzt man der Monomer/Vernetzer-Mischung Porogene zu, wie sie beispielsweise bei Seidl et al., Adv. Polym. Sci., Vol. 5 (1967), S. 113 bis 213, beschrieben sind, z.B. aliphatische Kohlenwasserstoffe, Alkohole, Ester, Ether, Ketone, Trialkylamine, Nitroverbindungen, vorzugsweise Isododecan, Isodecan, Methylisobutylketon oder Methylisobutylcarbinol, in Mengen von 1 bis 150 Gew.-%, vorzugsweise 40 bis 100 Gew.-%, insbesondere 50 bis 80 Gew.-%, bezogen auf die Summe von Monomer und Vernetzer.

Die Polymerisationstemperatur richtet sich nach der Zerfallstemperatur des eingesetzten Initiators. Sie liegt im allgemeinen zwischen 50 und 150°C, vorzugsweise zwischen 55 und 100°C. Die Polymerisation dauert 0,5 bis einige Stunden. Es hat sich bewährt, ein Temperaturprogramm anzuwenden, bei dem die Polymerisation bei niedriger Temperatur, z.B. 60°C, begonnen und die Reaktionstemperatur mit fortschreitendem Polymerisationsumsatz gesteigert wird.

Die resultierenden Perlpolymerisate können als solche oder aber über eine durch ein sogenanntes seed/feed-Verfahren zugängliche Zwischenstufe mit vergrößerter Teilchengröße der Funktionalisierung zugeführt werden. Ein seed/feed-Verfahren beinhaltet die Verfahrensschritte, das ursprünglich erhaltene Polymerisat ("seed") mit copolymerisierbaren Monomeren anzuquellen ("feed") und das in das Polymerisat eingedrungene Monomer zu polymerisieren. Geeignete seed/feed-Verfahren werden beispielsweise in den EP 0 098 130 B1 und EP 0 101 943 B1 beschrieben.

Als monodispers werden in der vorliegenden Anmeldung solche Stoffe bezeichnet, bei denen mindestens 90 Volumen- oder Massen-% der Teilchen einen Durchmesser besitzen, der in dem Intervall mit der Breite von ± 10 % des häufigsten Durchmessers um den häufigsten Durchmesser herum liegt. Beispielsweise liegen dann bei einem Perlpolymerisat dessen Kügelchen einen häufigsten Durchmesser von 0,50 mm aufweisen, mindestens 90 Volumen- oder Massen-% in einem Größenintervall zwischen 0,45 mm und 0,55 mm, oder bei einem Perlpolymerisat, dessen Kügelchen einen häufigsten Durchmesser von 0,70 mm aufweisen mindestens 90 Volumen- oder Massen-% in einem Größenintervall zwischen 0,77 mm und 0,63 mm.

Davon abweichende Perlpolymerisate werden gemäß der vorliegenden Anmeldung als heterodispers bezeichnet.

Heterodisperse-makroporöse Basispolymerisate können beispielsweise nach US-A 3 716 482 oder US-A 3 637 535 hergestellt werden.

Monodisperse Basispolymerisate erhält man durch Aussieben heterodisperser Perlpolymerisate oder prozessbedingt durch Verdüsungstechniken wie Jetten, seed/feed oder Direktverdüsung. Beispielhaft werden diese Verfahren in US-A 3 922 255, US-A 4 444 961 und US-A 4 427 794 beschrieben.

Monodisperse-gelförmige Basispolymerisate können beispielsweise nach DE-A 19 852 667 oder DE-A 10 020 534 hergestellt werden.

Entscheidend für das erfindungsgemäße Sulfonierungsverfahren ist die Durchführung des Verfahrensschrittes a) ohne Quellmittel, bei Temperaturen von 110° bis 140°C, bevorzugt von 115° bis 120°C.

Die im Verfahrensschritt a) einzusetzende Schwefelsäure hat bevorzugt Konzentrationen im Bereich von 92 bis 100 %, besonders bevorzugt 92,5 bis 99 %. In einer bevorzugten Weise wird das Basispolymerisat unter Rühren in die Schwefelsäure eindosiert.

Das erfindungsgemäße Verfahren kann sowohl in Anwesenheit als auch in Abwesenheit von Luft bzw. Sauerstoff durchgeführt werden. Im Falle, dass man es in Abwesenheit von Luft bzw. Sauerstoff betreibt, empfiehlt sich der Einsatz von Inertgas, insbesondere von Stickstoff.

Das Nachrühren im Verfahrensschritt b) erfolgt solange, bis die Sulfonierung des makroporösen oder gelförmigen Perlpolymerisats abgeschlossen ist. Man behält dabei die Sulfonierungstemperatur aus Verfahrensschritt a) bei und kontrolliert den Grad der Sulfonierung durch eine optische Beurteilung der Perlen unter dem Mikroskop. Die Sulfonierung erfolgt vom Perläußeren zum Perlinneren (Kern) hin. Die Sulfonierungsfront zeigt sich dabei in der Ausbildung von Ringen in den Perlen. Bei abgeschlossener Sulfonierung zeigen die Perlen keine Ringe mehr, sie sind optisch einheitlich und ohne Struktur.

Im Verfahrensschritt c) erfolgt die stufenweise, getaktete Verdünnung entlang dem Konzentrationsgradienten mit Schwefelsäuren abnehmender Konzentration.

Gegebenenfalls wird für den Verfahrensschritt c) die Suspension des sulfonierten Polymerisats in eine Säule, bevorzugt in eine Glassäule, überführt.

Zum Beginn der stufenweisen, getakteten Verdünnung bzw. zum Zeitpunkt der Überführung in eine Säule kann die konzentrierte Schwefelsäure beispielsweise eine Konzentration von 90 Gew.-% oder mehr aurweisen und bei dem Bett in der Säule aus sulfoniertem Kationenaustauscherharz und konzentrierter Schwefelsäure kann es sich beispielsweise um das bei der Sulfonierung der Kügelchen aus unfunktionalisiertem Harz anfallende Gemisch handeln. Nach einer Ausführungsform der Erfindung erfolgt nun stufenweise getaktet das Waschen des sulfonierten makroporösen Perlpolymerisats mit jeweils diskreten Mengen (sogenannten Batches oder Chargen) wässriger Schwefelsäuren vom oberen Ende der Säule her durch das Bett. Im Falle, dass die Anfangskonzentration der Schwefelsäure 90 Gew.-% beträgt, bestehen die Batches beispielsweise aus wässrigen Schwefelsäuren entlang des Konzentrationsgradienten, beispielsweise 88 Gew.-%, 75 Gew.-%, 65 Gew.-%, 35 Gew.-% und 15 Gew.-%, da derartige Konzentrationen beim Hindurchführen durch ein Bett enthaltend 90 gew.-%ige Schwefelsäure brauchbare Konzentrationen beispielsweise zum Rückführen liefert.

Während der getakteten Verdünnung wird das zunächst in konzentrierter Schwefelsäure vorliegende sulfonierte Perlpolymerisat in den wasserfeuchten Zustand überführt. Mit der stufenweise erfolgenden Hydratisierung ist eine Volumenzunahme der Perlen verbunden.

Ferner werden die Perlen hierbei auch gereinigt. Die abfließende Schwefelsäure führt Verunreinigungen wie lösliche Polystyrolsulfonsäuren mit sich. Der Austritt der Verunreinigungen aus dem Perlinneren nach außen ist im wesentlichen diffisionskontrolliert. Das bei der zeitlich getakteten Verdünnung auftretende Wechselspiel von Filtration und Stillstand der Filtration fördert die Diffusion von Verunreinigungen aus dem Perlinneren nach außen und die Entfernung dieser Verunreinigungen aus der Säule.

Bevorzugt haben die von oben nach unten durch das Harzbett zu führenden Batches Schwefelsäure-Konzentrationen im Bereich von 90 bis 70 Gew.-%, 70 bis 55 Gew.-%, 55 bis 40 Gew.-%, 40 bis 30 Gew.-% und schließlich unter 20 Gew.-%. Die Anzahl der Batches hängt vom jeweiligen Bedarf ab und kann von Ansatz zu Ansatz variieren. Die genannten Konzentrationenbereiche sind beispielhaft aber nicht limitierend auf die genannten Zahlen beschränkt.

Der Begriff "getaktet" hat im Rahmen der vorliegenden Erfindung die folgende Bedeutung:

Für eine Zeit x wird Schwefelsäure abnehmender Konzentration über das sulfonierte Harz filtriert. Nach Ablauf der Zeit x wird die Filtration für eine Zeit y gestoppt. Das Harz bleibt in der Säule stehen. Nach Ablauf der Zeit y wird die Filtration der Schwefelsäure fortgesetzt. Dieser Vorgang wird bis zu 10 mal wiederholt. Zum Schluß wird mit Wasser ausgewaschen bis das vom Harz abfließende Wasser einen pH-Wert von ca. 5 zeigt. Für die gesamte getaktete Verdünnung werden ca. 6 Stunden benötigt.

Die Zeiten x und y sind im Gesamtrahmen frei wählbar, wobei x größer als y ist.

Um den Waschvorgang des sulfonierten Perlpolymerisates für die Harzkügelchen möglichst schonend durchzuführen empfiehlt sich die batchweise Verdünnung bei Temperaturen von 60 bis 100°C durchzuführen, bevorzugt bei 65 bis 95°C.

Nach dem Durchlaufen der Säule mit dem sulfonierten Perlpolymerisat können die einzelnen Batches gesammelt und rückgeführt, das heißt wiederverwendet werden.

Ohne Festlegung auf irgendwelche theoretischen Überlegungen wird angenommen, dass der Dichteunterschied zwischen aneinander angrenzenden Chargen wässriger Schwefelsäure unterschiedlicher Konzentration beim Hindurchführen der diskreten Mengen wässriger Schwefelsäure abnehmender Konzentration durch das Bett von oben nach unten eine "Pfropfenströmung" ergeben kann. Das würde bedeuten, dass an der Grenzfläche zwischen aneinander angrenzenden diskreten Mengen Schwefelsäure unterschiedlicher Konzentration keine sehr große Durchmischung stattfindet. Dies kann durch sorgfältige Wahl der Strömungsbedingungen noch weiter verbessert werden.

Das Gleichgewicht zwischen der von oben nach unten durch das Bett hindurchgeführten wässrigen Schwefelsäure und dem sulfonierten Harz im Bett im Verfahrensschritt c) wirkt sich auf die in der wässrigen Schwefelsäure vorliegende Wassermenge dahingehend aus, dass eine bestimmte diskrete Menge wässriger Schwefelsäure beim Austritt aus dem Bett im allgemeinen eine höhere Schwefelsäurekonzentration aufweist, als beim Eintrag in das Bett. Infolge dieser Faktoren weist die aus dem Bett austretende Schwefelsäure weitgehend vollständig eine so hohe Konzentration auf, dass sie entweder in Form der direkt erhaltenen einzelnen Fraktionen mit spezifischer, unterschiedlicher Schwefelsäurekonzentration oder nach Vermischen von zwei oder mehrartigen Fraktionen zu Schwefelsäure einer gewünschten Konzentration zum Waschen von weiterem Harz verwendet werden kann. Alternativ dazu kann man eine solche Schwefelsäure auch bei anderen chemischen Verfahren einsetzen oder in den Handel bringen.

Da die im Grenzflächenbereich zwischen der Schwefelsäure niedrigster Konzentration und dem durch das Bett geführten Wasser stattfindende Vermischung auf ein Minimum reduziert wird und allenfalls die durch Vermischung in diesem Grenzflächenbereich anfallende hochverdünnte wässrige Schwefelsäure als Abfall abgeführt werden muss, wird auch die Gesamtmenge der als Abfall abzuführenden Schwefelsäure auf ein Minimum reduziert.

Neben der sehr geringen Menge an Abfallschwefelsäure weist das erfindungsgemäße Verfahren zur Sulfonierung makroporöser Perlpolymerisate außerdem noch die folgenden weiteren Vorteile auf:
1. Infolge der sehr geringen Menge an Abfallschwefelsäure wird auch die zur Neutralisation erforderliche Menge an Neutralisationsmittel, beispielsweise Kalk oder Natriumhydroxid, ebenfalls auf ein Minimum reduziert.
2. Durch sorgfältige Wahl von Konzentrationsmengen der Schwefelsäurechargen werden bei dem erfindungsgemäßen Verfahren wesentlich geringere Mengen wässriger Schwefelsäure benötigt, als bei den bekannten diskontinuierlichen Hydratisierungsverfahren.
3. Durch den gewählten Temperaturbereich wird der Wärmeschock, den die Harzkügelchen bei dem erfindungsgemäßen Verfahren erfahren, und somit die Wahrscheinlichkeit des Zerbrechens der Harzkügelchen, gegenüber den bekannten Hydratisierungsverfahren verringert.
4. Durch das erfindungsgemäße Verfahren ist es möglich, makroporöse-monodisperse und makroporöse-heterodisperse aber auch monodisperse-gelförmige Kationenaustauscher ohne Zusatz inerter Quellmittel herzustellen, deren Leachingverhalten im Vergleich zu herkömmlichen Sulfonierungsverfahren weiter optimiert wird und die sich durch besonders hohe mechanische und osmotische Stabilität sowie hohe Austauschkapazität und Reinheit auszeichen.

Sie erfüllen damit die hohen Anforderungen an moderne Katalysatoren für chemische Reaktionen der oben genannten Art sowie zur Reinstwasserdarstellung für die Elektronikindustrie und Chipindustrie.

Das Volumen jeder diskreten Menge wässriger Schwefelsäure, die durch das Bett hindurchgeführt wird, kann sich beispielsweise auf 0,75 bis 2,0 l/kg Harz im Bett belaufen. Das Volumen der durch das Harz-enthaltende Bett hindurchgeführten diskreten Menge Wasser kann beispielsweise 3 bis 4 l/kg Harz im Bett betragen.

Die Durchflussrate jeder diskreten Menge wässriger Schwefelsäure und/oder der diskreten Menge Wasser durch das Harz-enthaltende Bett beträgt 2 bis 4 l/kg Harz.

Die während des Verdünnungsschrittes c) erzeugte latente Verdünnungswärme wird gering gehalten, beispielsweise durch entsprechende Wahl der Konzentrationen der wässrigen Schwefelsäure. Es sind keine Einrichtungen zum Kühlen der Säule erforderlich. Außerdem kann man der Ausdehnung des Harzes, die bei dem erfindungsgemäßen Verfahren infolge der Behandlung mit wässriger Schwefelsäure und Wasser auftritt, durch Erzeugung einer pulsartigen Rückströmung des Austragstroms durch das Harzbett leicht Rechnung tragen.

Schließlich erfolgt im Verfahrensschritt d) die Wäsche des sulfonierten makroporösen Perlpolymerisats mit vollentsalztem Wasser (VE-Wasser), bevorzugt bei einer Temperatur im Bereich 60°C bis 100°C, insbesondere bevorzugt im Bereich 70°C bis 95°C.

Die Wäsche mit VE-Wasser wird solange durchgeführt, bis das aus dem Bett am Boden der Säule abfließende Wasser einen pH-Wert von mehr als 5 aufweist.

Gegebenenfalls kann im Anschluss an den Verfahrensschritt d) der Verfahrensschritt e) die Umladung des sulfonierten makroporösen Perlpolymerisats aus der H-Form in die Salzform durchgeführt werden. Die Umladung in die Salzform, bevorzugt der Natrium-Form, erfolgt durch Zugabe von 10 bis 60 gew.-%iger Alkalilauge, bevorzugt von 10 bis 60 gew.-%iger Natronlauge.

In einer bevorzugten Ausführungsform wird die Umladung in einem Temperaturbereich zwischen 60°C und 120°C, insbesondere zwischen 65°C und 100°C durchgeführt.

Die gemäß dem erfindungsgemäßen getakteten Sulfonierungsverfahren hergestellten makroporösen-monodispersen und makroporösen-heterodispersen und monodispersen-gelförmigen Ionenaustaucher eignen sich hervorragend als Katalysatoren für Kondensationsreaktionen, für Additionsreaktionen, beispielsweise von Alkoholen an Alkenen zu Ethern, als Katalysatoren bei Veresterungen oder Umesterungen aber auch als Katalysatoren bei Alkylierungsreaktionen.

Bedingt durch den geringen Einsatz an Schwefelsäure eignen sich die gemäß dem erfindungsgemäßen Sulfonierungsverfahren hergestellten Ionenaustauscher zur Trinkwasseraufbereitung, zur Reinigung und Aufarbeitung von Wässern der chemischen und Elektro- bzw. Elektronikindustrie, zur Herstellung von Leiterplatten und in der Chipindustrie, insbesondere zur Herstellung von Reinstwasser, aber auch zur chromatographischen Trennung von Zuckern, das heißt in der Lebensmittelindustrie.

Weiterhin eignen sich die gemäß dem erfindungsgemäßen Sulfonierungsverfahren hergestellten Kationenaustauscher
- zur Entfernung von Kationen, Farbpartikeln oder organischen Komponenten aus wässrigen oder organischen Lösungen und Kondensaten, wie z.B. Prozess- oder Turbinenkondensaten,
- zur Enthärtung im Neutralaustausch von wässrigen oder organischen Lösungen und Kondensaten, wie z.B. Prozess- oder Turbinenkondensaten,
- zur Reinigung und Aufarbeitung von Wässern der chemischen Industrie, der Elektronik-Industrie und aus Kraftwerken,
- zur Vollentsalzung wässriger Lösungen und/oder Kondensate in Kombination mit gelförmigen und/oder makroporösen Anionenaustauschern,
- zur Entfärbung und Entsalzung von Molken, Gelatinedünnbrühen, Fruchtsäften, Fruchtmosten und wässrigen Lösungen von Zuckern.

Infolgedessen betrifft die vorliegende Erfindung auch
- Verfahren zur Entfernung von Kationen, Farbpartikeln oder organischen Komponenten aus wässrigen oder organischen Lösungen und Kondensaten, wie z.B. Prozess- oder Turbinenkondensaten, unter Einsatz erfindungsgemäß sulfonierter Kationenaustauscher,
- Verfahren zur Enthärtung im Neutralaustausch von wässrigen oder organischen Lösungen und Kondensaten, wie z.B. Prozess- oder Turbinenkondensaten, unter Einsatz erfindungsgemäß sulfonierter Kationenaustauscher,
- Verfahren zur Reinigung und Aufarbeitung von Wässern der chemischen , der Elektronik-Industrie und aus Kraftwerken unter Einsatz erfindungsgemäß sulfonierter Kationenaustauscher,
- Verfahren zur Vollentsalzung wässriger Lösungen und/oder Kondensate, wie z.B. Prozess- oder Turbinenkondensate, unter Einsatz erfindungsgemäß sulfonierter Kationenaustauscher in Kombination mit heterodispersen oder monodispersen, gelförmigen und/oder makroporösen Anionenaustauschern,
- Verfahren zur Entfärbung und Entsalzung von Molken, Gelatinedünnbrühen, Fruchtsäften, Fruchtmosten und wässrigen Lösungen von Zuckern in der Zucker-, Stärke- oder Pharmaindustrie oder Molkereien unter Einsatz erfindungsgemäß sulfonierter Kationenaustauscher.

### Untersuchungsmethoden

### Bestimmung der Leitfähigkeit des vom Harz abfließenden Wassers

In eine Glassäule (Länge 30 cm, Durchmesser 2 cm) werden 100 ml Kationenaustauscher in der H-Form in vollentsalztem Wasser eingeschlämmt. Das über dem Harz stehende Wasser wird abgelassen. Anschließend werden 70°C heißes entionisiertes Wasser mit einer Geschwindigkeit von 0,2 Bettvolumen pro Stunde über das Harz filtriert. Im Eluat wird nach Ablauf von 2 und 4 Bettvolumen Wasser die elektrische Leitfähigkeit des Wassers, das auf 20°C abgekühlt wurde, gemessen.

### Bestimmung der Harzstabilität des Harzes nach dem Walztest

Das zu prüfende Perlpolymerisat wird in gleichmäßiger Schichtdicke zwischen zwei Kunststofftücher verteilt. Die Tücher werden auf eine feste, waagerecht angebrachte Unterlage gelegt und in einer Walzapparatur 20 Arbeitstakten unterworfen. Ein Arbeitstakt besteht aus einer vor und zurück durchgeführten Walzung. Nach dem Walzen werden an repräsentativen Mustern an 100 Perlen durch Auszählen unter dem Mikroskop die Anzahl der unversehrten Perlen ermittelt.

### Beispiele

### Beispiel 1

### Beispiel für eine Sulfonierung mit konventioneller Verdünnung:

In einen Laborreaktor werden 1800 ml 94,4 gew.-%ige Schwefelsäure dosiert. Die Schwefelsäure wird auf 80°C erhitzt. Dann werden in 6 Portionen alle 20 Minuten je 75 g makroporöses-monodisperses Perlpolymerisat dosiert. Anschließend wird in 60 Minuten auf 115°C erhitzt. Weitere 6 Stunden wird bei 115°C gerührt.

Die Suspension wird in eine Säule filtriert und mit Schwefelsäuren abnehmender Konzentration, beginnend mit 90 Gew.-% und zuletzt mit reinem Wasser jedoch nicht getaktet über eine Säule filtriert - wie in der DE-A 10 020 534 beschrieben.

Insgesamt gesehen werden für die gesamte Verdünnung 1899 g Schwefelsäure 100 gew.-%ig benötigt.

Ausbeute an sulfoniertem wasserfeuchtem Harz : 2410 ml

### Beispiel 2

Beispiel für eine Sulfonierung mit getakteter Verdünnung gemäß der vorliegenden Erfindung.

Die eigentliche Sulfonierung erfolgt wie in Beispiel 1 beschrieben.

Anschließend wird die Suspension in eine Säule filtriert, die auf 90°C temperiert wurde.

250 ml einer 80 gew.-%igen Schwefelsäure werden in 1 Stunde über das Harz filtriert. Dann wird die Filtration und der Abfluß von Säure für eine Stunde gestoppt. Anschließend werden 250 ml einer 65 gew.-%igen Schwefelsäure in 1 Stunde über das Harz filtriert. Dann wird die Filtration und der Abfluß von Säure für eine Stunde gestoppt. Anschließend werden 250 ml einer 35 gew.-%igen Schwefelsäure in 1 Stunde über das Harz filtriert. Dann wird die Filtration und der Abfluß von Säure für eine Stunde gestoppt. Es werden 100 ml einer 15 gew.-%igen Schwefelsäure in 1 Stunde über das Harz filtriert. Dann wird die Filtration und der Abfluß von Säure für eine Stunde gestoppt. Zum Schluß wird das Harz in der Säule mit vollentsalztem Wasser gewaschen, bis das am Boden der Säule abfließende Wasser einen pH-Wert größer 5 zeigt.

Insgesamt gesehen werden für die gesamte Verdünnung 727 g Schwefelsäure 100 gew.-%ig benötigt.

### Ausbeute an sulfoniertem wasserfeuchtem Harz: 2420 ml

| | | |
|---|---|---|
| Getaktete Verdünnung des sulfonierten Harzes ja/nein | Leitfähigkeit des vom Harze abfließenden Wassers nach Filtration von 2 bzw. 4 Bettvolumen in µS/cm | Harzstabilität nach dem Walztest Anzahl perfekter Perlen von 100 |
| ja gemäß Beispiel 2 | 26 / 16 | 94 |
| nein gemäß Beispiel 1 | 50 / 40 | 88 |

Das erfindungsgemäße stufenweise getaktete Sulfonierungsverfahren verbraucht überraschenderweise deutlich weniger Schwefelsäure und führt darüber hinaus zu einer sehr viel niedrigeren Leitfähigkeit des vom Harz abfließenden Wassers sowohl nach 2 als auch 4 Bettvolumen Wasser als auch zu einer erhöhten Anzahl perfekter Perlen, als wenn das Sulfonierungsverfahren nicht getaktet durchgeführt wird.

## Patentansprüche

1. Sulfonierungsverfahren zur Herstellung makroporöser und monodisperser-gelförmiger Kationenaustauscher, **dadurch gekennzeichnet, dass** man
a) makroporöse oder monodisperse-gelförmige Perlpolymerisate ohne Quellmittel bei Temperaturen von 110°C bis 140°C in Schwefelsäure eindosiert,
b) bei der jeweiligen Temperatur solange nachrührt, bis eine vollständige Sulfonierung erfolgt ist,
c) nach erfolgter Sulfonierung das jeweilige Perlpolymerisat stufenweise, getaktet mit Schwefelsäuren abnehmender Konzentration verdünnt und
d) schließlich mit vollentsalztem Wasser wäscht.

2. Verfahren gemäß Anspruch 1, **dadurch gekennzeichnet, dass** Verfahrensschritt c) im Temperaturbereich von 60°C bis 110°C durchgeführt wird.

3. Verfahren gemäß Anspruch 1, **dadurch gekennzeichnet, dass** die Schwefelsäure im Verfahrensschritt a) eine Konzentration im Bereich 92 bis 100 Gew.-% hat.

4. Verfahren gemäß Anspruch 1, **dadurch gekennzeichnet, dass** das Wasser im Verfahrensschritt d) eine Temperatur im Bereich 60°C bis 100°C hat.

5. Verfahren gemäß Anspruch 1, **dadurch gekennzeichnet, dass** die stufenweise, getaktete Verdünnung im Verfahrensschritt c) mit Schwefelsäure Konzentrationen im Bereich von 90 bis 70 Gew.-%, 70 bis 55 Gew.-%, 55 bis 40 Gew.-%, 40 bis 30 Gew.-% und schließlich unter 20 Gew.-% durchgeführt wird.

6. Verfahren gemäß der Ansprüche 1 und 3, **dadurch gekennzeichnet, dass** das makroporöse Basispolymerisat portionsweise in die Schwefelsäure eindosiert wird.

7. Verfahren gemäß Anspruch 1, **dadurch gekennzeichnet, dass** das Nachrühren im Verfahrensschritt b) bei der jeweiligen Temperatur des Verfahrensschrittes a) bis zur vollständigen Sulfonierung erfolgt.

8. Verfahren gemäß Anspruch 1, **dadurch gekennzeichnet, dass** nach dem Schritt d) die Umladung des sulfonierten makroporösen Perlpolymerisats oder des sulfonierten monodispersen-gelförmigen Perlpolymerisats von der H-Form in die Salzform in einem Schritt e) erfolgt.

9. Makroporöse oder monodisperse-gelförmige Kationenaustauscher in der H-Form erhältlich nach einem der Ansprüche 1 bis 7.

10. Makroporöse oder monodisperse-gelförmige Kationenaustauscher in der Natrium-Form, **dadurch gekennzeichnet, dass** man die Kationenaustauscher gemäß Anspruch 9 mit Natronlauge einer Konzentration von 10 bis 60 Gew.-% umläd.

11. Verwendung der Kationenaustauscher gemäß der Ansprüche 9 und 10 bei der Trinkwasseraufbereitung, Herstellung von Reinstwasser, zur Aufarbeitung von Wässern der chemischen Industrie, der Elektro- und Elektromikroindustrie, der Chipindustrie, zur chromatografischen Trennung von Zuckern oder als Katalysatoren für chemische Reaktionen.

12. Verwendung der Kationenaustauscher gemäß Ansprüche 11, **dadurch gekennzeichnet, dass** die chemischen Reaktionen Kondensationsreaktionen, Additionsreaktionen, Umesterungen oder Alkylierungsreaktionen sind.

13. Verfahren gemäß Anspruch 1, **dadurch gekennzeichnet, dass** dieses in einer prozessgesteuerten Anlage durchgeführt wird.
